(19) Europäisches Patentamt / European Patent Office / Office européen des brevets

(11) **EP 1 995 215 B1**

(12) **EUROPEAN PATENT SPECIFICATION**

(45) Date of publication and mention
of the grant of the patent:
**22.10.2014 Bulletin 2014/43**

(21) Application number: **07714315.4**

(22) Date of filing: **15.02.2007**

(51) Int Cl.:
*C01B 39/04* [(2006.01)]    *B01D 69/04* [(2006.01)]
*B01D 69/06* [(2006.01)]    *B01D 69/12* [(2006.01)]
*B01D 71/02* [(2006.01)]    *B01D 53/22* [(2006.01)]
*B01D 67/00* [(2006.01)]    *C01B 39/48* [(2006.01)]

(86) International application number:
**PCT/JP2007/052785**

(87) International publication number:
**WO 2007/105407 (20.09.2007 Gazette 2007/38)**

(54) **PROCESS FOR PRODUCING DDR TYPE ZEOLITE MEMBRANE**

VERFAHREN ZUR HERSTELLUNG EINER MEMBRAN AUS EINEM ZEOLITH VOM DDR-TYP

PROCEDE DE FABRICATION D'UNE MEMBRANE EN ZEOLITHE DE TYPE DDR

(84) Designated Contracting States:
**DE FR NL**

(30) Priority: **14.03.2006 JP 2006069366**

(43) Date of publication of application:
**26.11.2008 Bulletin 2008/48**

(73) Proprietor: **NGK Insulators, Ltd.**
**Nagoya-shi, Aichi 467-8530 (JP)**

(72) Inventors:
• **YAJIMA, Kenji**
**Aichi 467-8530 (JP)**
• **NAKAYAMA, Kunio**
**Aichi 467-8530 (JP)**

(74) Representative: **Paget, Hugh Charles Edward**
**Mewburn Ellis LLP**
**33 Gutter Lane**
**London**
**EC2V 8AS (GB)**

(56) References cited:
**EP-A1- 1 437 172**    **JP-A- 2004 066 188**
**JP-A- 2004 083 375**    **JP-A- 2005 053 747**

• **DATABASE WPI Week 200522 Thomson Scientific, London, GB; AN 2005-205360 XP002664902, -& JP 2005 053747 A (NGK INSULATORS LTD) 3 March 2005 (2005-03-03)**
• **DATABASE WPI Week 200425 Thomson Scientific, London, GB; AN 2004-262442 XP002664904, -& JP 2004 083375 A (NGK INSULATORS LTD) 18 March 2004 (2004-03-18)**

Remarks:
The file contains technical information submitted after the application was filed and not included in this specification

**Description**

Technical Field

The present invention relates to a method for producing a DDR type zeolite membrane and, more particularly, to a method for producing a DDR type zeolite membrane having a small and uniform thickness and high gas permeability.

Background Art

Zeolite is used as a catalyst, a catalyst carrier, an absorption material, or the like. A zeolite-laminated composite in which a membrane is formed on a porous substrate made of metal or ceramics is used in a gas separating membrane or a pervaporation membrane, using the molecular sieves effect of zeolite. In such a situation, a zeolite-laminated composite using various porous substrates and a method for producing the same have been proposed.

There are various types of zeolite such as LTA, MFI, MOR, AFI, FER, FAU, and DDR according to crystal structure. It has been known that DDR (Deca-Dodecasil 3R) among them is a crystal formed mainly of silica, that pores thereof are formed by polyhedron including oxygen 8-membered ring, and that diameter of the pores including oxygen 8-membered ring is $4.4 \times 3.6$ angstrom (see W. M. Meier, D. H. Olson, Ch. Baerlocher, Atlas of zeolite structure types, Elsevier (1996)).

The DDR type zeolite having such structural characteristics has relative small pore diameters among various types of zeolite, and may be applied as a molecular sieve membrane of low molecular gas such as carbon dioxide ($CO_2$), methane ($CH_4$), and ethane ($C_2H_6$).

As a method for producing such a DDR type zeolite membrane, for example, there is disclosed a method for producing a DDR type zeolite powder by a hydrothermal synthesis, using tetramethoxysilane, 1-adamantanamine, ethylenediamine, and the like as raw materials (e.g., see Non-Patent document 1).

In this method, a long time is necessary for synthesis of zeolite, and only powder-shaped DDR type zeolite having a particle diameter of about 5 to 25 $\mu$m can be obtained. For this reason, in industrial fields such as petrochemical industry, it is impossible to produce a precise separation membrane having an enough thickness to configure a gas separation process and the like.

On the contrary, there is disclosed a production method capable of producing a precise DDR type zeolite membrane for a short time in a manner that a content ratio of 1-adamantanamine, silica, water, and ethylenediamine in the raw material is set to a specific ratio (e.g., see Patent Document 1). This method has an excellent advantage that a precise DDR type zeolite membrane can be produced for a short time. However, in the viewpoint of small and uniform thickness of a membrane, further improvement thereof has been desired.

Non-Patent Document 1: M. J. den Exter, J. C. Jansen, H. van Bekkum, Studies in Surface Science and Catalysis vol. 84, Ed. by J. Weitkamp et al., Elsevier (1994)1159-1166

Patent Document 1: JP-A-2003-159518

EP A 1437172 describes a method of making a DDR type zeolite membrane by hydrothermal synthesis using a raw material solution containing 1-adamantanamine and silica in a molar ratio (1-adamantanamine/ $SiO_2$) of 0.03 to 0.4, having a molar ratio of water to silica (water/$SiO_2$) of 20 to 500 and containing ethylenediamine in a molar ratio to the 1-adamantanamine (ethylenediamine/1-adamantanamine) of 5 to 32. A DDR type zeolite powder is used as a seed crystal, which is obtained by making a DDR type zeolite powder having a particle diameter of about 100$\mu$m and grinding this into fine powder with a particle diameter of 5$\mu$m or less. JP A 2005 053747 describes a similar method of making a zeolite film on a porous substrate, in which seed crystals adhering to the surface of the porous substrate are removed before the hydrothermal synthesis, while seed crystals remain in the pores. The pores are then occluded by the synthesized zeolite, and the zeolite film is formed covering the surface of the substrate.

JP A 2004 083375 describes a hydrothermal method of making DDR type zeolite powder in which 1-adamantanamine is used as a structure-directing agent. Silica sol is present as raw material sol. A DDR type zeolite powder is used as a seed crystal. The molar ratio 1-adamantanamine/silica sol is preferred to be 0.03-0.5, more preferably 0.0625-0.375, and still more preferably 0.125-0.25. The ratio water/silica sol is 10-500.

Disclosure of the Invention

The invention has been made to solve the aforementioned problems, and an object of the invention is to provide a method for producing a DDR type zeolite membrane which is capable of stably producing a DDR type zeolite membrane having a small and uniform thickness and high gas permeability.

To achieve the aforementioned object, the method for producing a DDR type zeolite set out in claim 1 is provided according to the invention.

Preferably the content ratio of water to silica (water/silica) is 10 or more and less than 20.

Preferably the raw material solution contains ethylenediamine.

Preferably the DDR type zeolite membrane has a thickness of 15 μm or less.

The seed crystal is dispersed in the raw material solution to immerse the porous substrate therein, or alternatively the seed crystal is applied to the porous substrate, and the porous substrate having the seed crystal applied thereto is immersed in the raw material solution.

Preferably the porous substrate has a sheet shape, a cylinder shape, a honeycomb shape, or a monolith shape integrally formed of a plurality of cylindrical tubes.

As described above, according the method for producing a DDR type zeolite membrane of the invention, since the average particle diameter of the seed crystal present on the surface of the porous substrate is 300 nm or less at the time of the hydrothermal synthesis of the DDR type zeolite, and the mass of the seed crystal per unit area of the porous substrate is 0.03 to 50 μg/cm$^2$, it is possible to form a state that the seed crystal having the small particle diameter is properly dispersed on the surface of the porous substrate. In addition, since the content ratio of 1-adamantanamine to silica is 0.002 to less than 0.03 in terms of molar ratio, and the content ratio of water to silica is in the range of 10 to 500 in terms of molar ratio, the raw materials such as 1-adamantanamine are blended in the raw material solution in proper balance, and thus it is possible to grow the seed crystal to stably form a uniform membrane on the surface of the porous substrate.

Brief Description of the Drawings

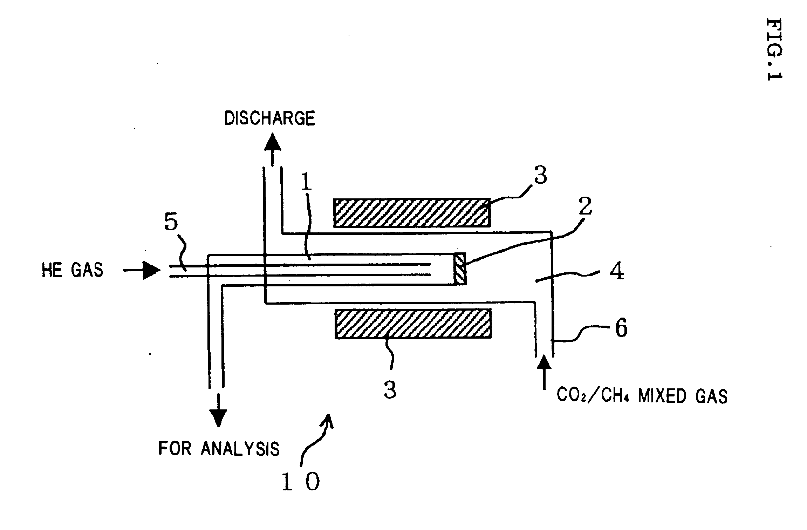

[Fig. 1] Fig. 1 is a schematic diagram illustrating a constitution of a gas permeation tester used in a gas permeation test.

Description of Reference Numerals

1: Measurement Tube, 2: DDR type zeolite membrane, 3: Tube-shaped furnace, 4: Furnace core tube, 5: quartz tube, 6: Gas introducing port, 10: Gas permeation tester

Best Mode for Carrying out the Invention

Next, embodiments of the invention will be described in detail. However, the invention is not limited to the following embodiments, and modifications, improvements, or the like of the design of the invention may be added in the scope of not deviating from the gist of the invention on the basis of the general knowledge of a person skilled in the art. In the drawing, the constituent element having the same reference numeral denotes the same constituent element.

An embodiment of a method for producing a zeolite membrane of the invention is a method for producing a DDR type zeolite membrane, which includes immersing a porous substrate in a raw material solution containing 1-adamantanamine, silica, and water and carrying out a hydrothermal synthesis of DDR type zeolite in the presence of a DDR type zeolite seed crystal (seed crystal) to form a DDR type zeolite membrane on the surface of the porous substrate. A content ratio of 1-adamantanamine to silica (1-adamantanamine/silica) is 0.002 to less than 0.03 in terms of molar ratio, a content ratio of water to silica (water/silica) is in the range of 10 to 500 in terms of molar ratio, the seed crystal has an average particle diameter of 300 nm or less, and the seed crystal has a mass per unit area of the porous substrate in the range of 0.03 to 50 μg/cm$^2$. Hereinafter, the content ratio (molar ratio) of 1-adamantanamine to silica may be referred to as "1-adamantanamine/silica ratio", and the content ratio (molar ratio) of water to silica may be referred to as "water/silica ratio".

In the present embodiment, 1-adamantanamine is used as a structure directing agent for forming a DDR type zeolite membrane. First, a raw material solution is prepared using 1-adamantanmine, silica sol, water, ethylenediamine if necessary, and the other additives. For example, when sodium aluminate and sodium hydroxide are used as a small amount of additives, a part of Si constituting the DDR type zeolite membrane may be substituted by Al. According to the substitution, it is possible to add catalysis to the formed DDR type zeolite membrane in addition to the separation function. In the invention, at the time of preparing the raw material solution, the 1-adamantanamine/silica ratio and the water/silica ratio are strictly controlled.

The 1-adamantanamine/silica ratio is 0.002 or more and less than 0.03, and preferably 0.003 or more and less than 0.03. Particularly, when the ratio is less than 0.03 and the templating agent is reduced, the effect that the thickness of the DDR type zeolite membrane is made small and uniform is exhibited. In addition, when the blending quantity of the high-cost 1-adamantanamine is reduced, a good effect is exhibited in the viewpoint of the production cost. When the ratio is less than 0.002, the 1-adamantanamine of the structure directing agent is short, and therefore it is difficult to form the DDR type zeolite membrane, which is not preferable. When the ratio is more than 0.4, it is difficult to make the thickness of the DDR type zeolite membrane small and uniform, which is not preferable. To add the high-cost 1-adamantanamine more than that is not preferable in the viewpoint of the production cost.

The water/silica ratio is in the range of 10 to 500, preferably in the range of 10 to 170, and more preferably 10 or more and less than 20. When the ratio is less than 10, the silica concentration in the raw material solution is too high. Accordingly, it is difficult to form the precise DDR type zeolite membrane, which is not preferable. When the ratio is more than 500, the silica concentration in the raw material solution is too low, and therefore it is difficult to form the DDR type zeolite membrane, which is not preferably.

The raw material solution preferably contains ethylenediamine. It is possible to easily dissolve 1-adamantanamine by adding ethylenediamine to prepare the raw material solution, and therefore it is possible to produce the precise DDR type zeolite membrane having a uniform crystal size and thickness. The content ratio of ethylenediamine to 1-adamantanamine (ethylenediamine/1-adamantanamine) is preferably in the range of 5 to 32 in terms of molar ratio, more preferably in the range of 8 to 24, and particularly preferably in the range of 10 to 16. When the ratio is less than 5, the amount of ethylenediamine is not sufficient to dissolve 1-adamantanamine. When the ratio is more than 32, ethylenediamine that does not contribute to the reaction is excessive to cause increase in production cost, which is not preferable.

In the invention, it is preferable that 1-adamantanamine is previously dissolved in ethylenediamine to prepare 1-adamantanamine solution. It is more easy to use the raw material solution prepared by mixing the prepared 1-adamantanamine solution and the silica sol solution containing silica, and it is possible to produce the precise DDR type zeolite membrane having uniform crystal size and thickness by completely dissolving 1-adamantanamine, which is preferable. The silica sol solution may be prepared by dissolving fine powder-shaped silica in water or by hydrolyzing alkoxide, and the silica solution may be prepared by adjusting the silica concentration of a silica sol available on the market.

In the present embodiment, a porous substrate is immersed in a raw material solution, and a hydrothermal synthesis of DDR type zeolite is carried out in the presence of a DDR type zeolite seed crystal (seed crystal) to form a DDR type zeolite membrane on the surface of the porous substrate. In the embodiment, "in the presence of a seed crystal" means that the seed crystal is present in a state of contacting the surface of the porous substrate at the time of the hydrothermal synthesis. Thus, the seed crystal is previously dispersed in the raw material solution, and the porous substrate is immersed therein to carry out the hydrothermal synthesis. Alternatively, the seed crystal is previously applied to the surface of the porous substrate, and the porous substrate is immersed in the raw material solution to carry out the hydrothermal synthesis. In the viewpoint that the seed crystal is uniformly disposed on the surface of the porous substrate, it is preferable to previously apply the seed crystal to the surface of the porous substrate. In case to dispose the seed crystal at a difficult-application part such as an inner wall of a monolith-shaped through-holes, the seed crystal may be previously dispersed in the raw material solution in the viewpoint of work efficiency.

The average particle diameter of the seed crystal is 300 nm or less, preferably 200nm or less, and more preferably in the range of 4.1 to 200 nm. It is possible to form a small and uniform thickness by reducing the average particle diameter of the seed crystal. When the diameter is more than 300 nm, the thickness of the DDR type zeolite membrane becomes large, and it is difficult to form the membrane uniformly, which are not preferable. One side of unit lattice of the DDR type zeolite crystal is 4.1 nm. Accordingly, when the diameter is less than 4.1 nm, it is difficult to exhibit a function as the seed crystal. Therefore, it is preferable that the diameter is 4.1 nm or more. The average particle diameter of the seed crystal is a value measured using a dynamic light scattering device (e.g., DLS7000 made by OTSUKA ELECTRIC Co., Ltd).

The mass of the seed crystal per unit surface area of the porous substrate is in the range of 0.03 to 50 $\mu$g/cm$^2$, and preferably in the range of 0.1 to 50 $\mu$g/cm$^2$. Thus, it is possible to form a precise membrane without defect or the like even with a small seed crystal by defining the addition range of the seed crystal as described above. When the mass is less than 0.03 $\mu$g/cm$^2$, the DDR zeolite membrane may not be precisely formed. When the weight is more than 50 $\mu$g/cm$^2$, the thickness of the membrane may become large. In this case, "the mass of the seed crystal per unit surface area of the porous substrate" is a value obtained by dividing the mass of the seed crystal by the area of the surface of the porous substrate where the seed crystal is present. Accordingly, a part where the seed crystal is not present (e.g., a part where the seed crystal is not applied) even on the surface of the porous substrate is not included. In the case of dispersing the seed crystal in the raw material solution, the mass of the seed crystal is the total mass of the seed crystal added to the raw material solution. In the case of applying the seed crystal to the porous substrate, the mass of the seed crystal is the total mass of the seed crystal applied to the porous substrate.

As a method for dispersing the seed crystal in the raw material solution, a general stirring method may be used, or a method of ultrasonic process or the like may be employed. Thus, it is possible to form a DDR type zeolite membrane having a more precise and uniform thickness by uniformly dispersing the seed crystal.

As a method for applying the seed crystal to the porous substrate, any method may be selected from a dip coat method, a filtration coat method, an instillation method, a spin coat method, a printing method, and the like, depending on the purpose.

A method for immersing the porous substrate in the raw material solution and carrying out the hydrothermal synthesis of the DDR type zeolite is not limited particularly. For example, in the case of using the raw material solution in which the seed crystal is dispersed, the following method may be used.

A DDR type zeolite membrane is produced by putting a raw material solution containing a DDR type zeolite powder dispersed therein as a seed crystal in a proper container, for example, a pressure-resistant container together with a porous substrate and carrying out a hydrothermal synthesis. In the present embodiment, it is preferable that the temperature condition at the time of the hydrothermal synthesis is set in the range of 90 to 200°C, more preferable in the range of 90 to 180°C, and particularly preferably in the range of 100 to 160°C. When the hydrothermal synthesis is carried out at a temperature less than 90°C, it may be difficult to form the DDR type zeolite membrane. When the hydrothermal synthesis is carried out at a temperature more than 200°C, a DOH phase with a different phase may be formed. A process time for the hydrothermal synthesis may be 1 hour to 20 days.

The thickness of the formed DDR type zeolite membrane is preferably 15 $\mu$m or less, more preferably 7 $\mu$m or less, particularly preferably 3 $\mu$m or less, and most preferably in the range of 0.1 to 2 $\mu$m. When the thickness is more than 15 $\mu$m, gas permeability becomes low, which is not preferable. In this case, when the membrane is formed on the surface of the porous substrate, the membrane may have a part where the membrane goes into the pores of the porous substrate as well as on the surface of the porous substrate because a great number of pores are formed on the surface of the porous substrate. In the embodiment, "thickness" means a thickness including a part where the membrane goes into the pores of the porous substrate as described above. The thickness of the DDR type zeolite membrane is an average value at five sectional parts measured by an electron microscope photograph of a section cut along a thickness direction.

The porous substrate has a great number of pores which three-dimensionally continue. For this reason, the porous substrate has gas permeability. The diameter of the pores of the porous substrate on the side for forming the DDR type zeolite membrane is preferably in the range of 0.003 to 1 $\mu$m. When the diameter is less than 0.003 $\mu$m, resistance at the time of permeating gas may become high. When the diameter is more than 1 $\mu$m, a defect may easily occur in the DDR type zeolite membrane. In the present embodiment, a porous substrate may be appropriately used, which uses alumina, zirconia, ceramics such as mulite, glass, zeolite, clay, metal, or carbon as a raw material. In the viewpoint of pore diameter and strength, the porous substrate made of alumina is preferable. The porous substrate may have a sheet shape, a cylinder shape, a honeycomb shape, or a monolith shape integrally formed of a plurality of cylindrical tubes by way of example. In the present embodiment, "monolith shape" means that a plurality of cylindrical tubes are disposed and integrated, which has a plurality of through-holes extending in an axial direction and has a section having a lotus root shape.

Examples

Hereinafter, the invention will be described in detail with reference to examples, but the invention is not limited to the examples.

(Production of DDR type zeolite powder (seed crystal) dispersion liquid)

A DDR type zeolite powder was produced according to the method for producing a DDR type zeolite described in "M. J. den Exter, J. C. Jansen, H. van Bekkum, Studies in Surface Science and Catalysis vol. 84, Ed. by J. Weitkamp et al., Elsevier (1994)1159-1166", and the DDR type zeolite powder was pulverized into a fine powder, which was used as the seed crystal. The seed crystal after pulverization was dispersed in water, and then rough particles are removed, thereby obtaining a seed crystal dispersion liquid.

(Example 1)

2.10 g of ethylenediamine (produced by Wako Pure Chemical Industries, Ltd.) was put in a 100 ml wide-mouthed bottle made of fluorine resin, and then 0.33 g of 1-adamantanamine (produced by Aldrich, Ltd.) was added thereto and dissolved so that no precipitate of 1-adamantanamine remained. 23.80 g of water was put in a beaker, 16.31 g of 30 mass% silica sol (produced by Snow TexS, Nissan Chemical Industries, Ltd.) was added thereto, the DDR type zeolite seed crystal dispersion liquid produced by the above-described "Production of DDR type zeolite powder dispersion liquid" was added thereto and stirred slightly, and this was added to the wide-mouthed bottle, in which ethylenediamine and 1-adamantanamine were mixed together, and was strongly shaken, thereby preparing a raw material solution. In that case, the 1-adamantanamine/silca ratio was 0.0268, the water/silica ratio was 24, the ethylenediamine/1-adamantanamine ratio was 16, and the amount of the seed crystal per unit surface area of the porous substrate was 0.726 $\mu$g/cm$^2$. In the present example, the average particle diameter of the seed crystal measured by the dynamic light scattering device DSL7000 (made by OTSUKA ELECTRIC Co., Ltd.) was 190 nm.

The wide-mouthed bottle having the raw material solution put therein was set to a shaker and was shaken to be mixed for 1 hour at 500 rpm. Then, the raw material solution was transferred to a 100 ml inner-volume fluorine resin inner cylinder-attached stainless pressure-resistant container, an alumina plate having a diameter of 15 mm and a thickness of 1.5 mm and serving as the membrane-forming porous substrate was disposed in the container, and a heating treatment (hydrothermal synthesis) was carried out at 150°C for 72 hours.

After the heating treatment, a membrane was formed on the surface of the plate. After water-cleaning and drying were performed, the temperature was raised to 750°C in the air by an electron furnace at a rate of 0.1°C/min, it was kept for 4 hours, and then it was cooled to a room temperature at a rate of 1°C/min.

The crystal phase of the obtained membrane was assessed by X-ray diffraction. As a result, only diffraction peaks of the DDR type zeolite and alumina as the substrate were detected. A "diffraction peak of DDR type zeolite" in the X-ray diffraction is a diffraction peak described in No. 38-651 or 41-571 corresponding to Deca-dodecasil 3R represented in International Center for Diffraction Data (ICDD) "Powder Diffraction File".

The membrane was observed using an electron microscope. As a result, it could be confirmed that the membrane was a polycrystalline DDR type zeolite membrane. It could be confirmed that the average thickness was 11.2 $\mu$m from the electron microscope image of the cross section. In addition, it could be confirmed that there was no exposure of alumina particles constituting the alumina plate that is the substrate, and the DDR type zeolite crystal uniformly covered the surface of the substrate.

(Gas permeation test)

A gas permeation test was carried out using the DDR type zeolite membrane produced in Example 1. Fig. 1 is a schematic diagram illustrating a constitution of a gas permeation tester 10 used in the gas permeation test, which shows that a DDR type zeolite membrane 2 is attached to a tip of an alumina measurement tube 1 (inner diameter 15 mm), it is put in a furnace core tube 4 (inner diameter 25 mm) of a tube-shaped furnace, and a quartz tube 5 having an inner diameter 6 mm is passed through the inside of the measurement tube 1 up to the vicinity of the DDR type zeolite membrane 2 to form a triple tube structure. $CO_2/CH_4$ mixed gas (supply gas, 100 ml/min) was introduced into the outside (inside of the furnace core tube) of the measurement tube 1, and He gas (sweep gas, 100 ml/min) for recovering gas (permeation gas) permeating the DDR type zeolite membrane 2 was allowed to flow in the quartz tube 5 inside the measurement tube 1. In this state, the tube-shaped furnace 3 was left at a test temperature (100°C) for 10 minutes or more to be a steady state. The recovery gas including the gas permeating the DDR type zeolite membrane 2 was separated and taken, analysis thereof was carried out by gas chromatography, and then a permeation coefficient $(mol \cdot m^{-2} \cdot s^{-1} \cdot Pa^{-1})$ of $CO_2$ and $CH_4$ and a $CO_2/CH_4$ separation coefficient $\alpha$ were assessed. In this case, the separation coefficient $\alpha$ is a value represented in the following formula.

$$\texttt{Separation coefficient } \alpha = \texttt{(permeation CO}_2$$
$$\texttt{concentration/permeation CH}_4 \texttt{ concentration)/(supply CO}_2$$
$$\texttt{concentration/supply CH}_4 \texttt{ concentration)}$$

A composition ratio (1-adamantanamine/silica ratio, water/silica ratio) of the raw material solution, seed crystal conditions (seed crystal average particle diameter, seed crystal weight per unit area), heat treatment conditions (temperature, time), an appearance of the formed DDR type zeolite membrane (membrane appearance), a $CO_2$ permeability, a $CO_2/CH_4$ separation coefficient, and an average thickness ($\mu$m) are shown in Table 1.

(Examples 2 to 8)

The same operation as in Example 1 was carried out except that the composition ratio of the raw material solution and the heat treatment conditions were changed as shown in Table 1, thereby forming a DDR type zeolite membrane.

(Example 9)

The same operation as in Example 1 was carried out except that the seed crystal amount per unit area was changed as shown in Table 1, thereby forming a DDR type zeolite membrane.

(Example 10)

The same operation as in Example 1 was carried out except that the seed crystal amount per unit area and composition time were changed as shown in Table 1, thereby forming a DDR type zeolite membrane.

(Examples 11, 12, and 14)

The same operation as in Example 1 was carried out except that the composition of the raw material solution, heat treatment conditions, and seed crystal amount per unit area were changed as shown in Table 1, that the porous substrate was formed into an alumina plate having a diameter of 14 mm and a thickness of 1.5 mm, and that the seed crystal was applied to the porous substrate, thereby forming a DDR type zeolite membrane.

(Example 13)

The same operation as in Example 1 was carried out except that the composition of the raw material solution, heat treatment condition, and seed crystal amount per unit area were changed as shown in Table 1, that the porous substrate was formed into an alumina single tube with 11.8 mmΦ × 40 mmL, and that the seed crystal was applied to the porous substrate, thereby forming a DDR type zeolite membrane.

(Examples 15 to 17)

The same operation as in Example 1 was carried out except that the composition of the raw material solution, seed crystal average particle diameter, heat treatment condition, and seed crystal amount per unit area were changed as shown in Table 1, that the porous substrate was formed into an alumina monolith having outer diameter 30 mm × length 40 mm and a pore diameter 3 mm × 37 pores, and that the seed crystal was applied to the porous substrate, thereby forming a DDR type zeolite membrane.

(Comparative Examples 1 and 2)

The same operation as in Example 1 was carried out except that the composition ratio of the raw material solution was changed, thereby forming a DDR type zeolite membrane.

(Comparative Example 3)

The same operation as in Example 1 was carried out except that the seed crystal average particle diameter was changed as shown in Table 1, thereby a forming a DDR type zeolite membrane.

With respect to the DDR type zeolite membranes obtained in Examples 2 to 12, 14 and Comparative Examples 1 to 3, the crystal phase was assessed by X-ray diffraction in the same manner as the case of Example 1. As a result, only diffraction peaks of the DDR zeolite and the alumina as the substrate were detected. When they were observed using the electron microscope, it could be confirmed that the membrane was a polycrystalline DDR type zeolite membrane. With respect to Examples 13 and 15 to 17, since the membrane-forming surface was a curved surface, the assessment was not carried out by X-ray diffraction. However, from the observation result using the electron microscope, it could be guessed that the membrane was the polycrystalline DDR type zeolite membrane. With respect to the DDR type zeolite of Examples 2 to 14, the gas permeation test was carried out in the same manner as the case of the DDR type zeolite membrane of Example 1. With respect to Examples 15 to 17, the gas permeation test was carried out at 26°C using a measurement tube suitable for the monolith shape.

With respect to Examples 2 to 17 and Comparative Examples 1 to 3, in the same manner as Example 1, a composition ratio (1-adamantanamine/silica ratio, water/silica ratio) of the raw material solution, seed crystal conditions (seed crystal average particle diameter, seed crystal amount, seed crystal amount per unit area), heat treatment conditions (temperature, time), an appearance of the formed DDR type zeolite membrane, a $CO_2$ permeability, a $CO_2/CH_4$ separation coefficient, and an average thickness are shown in Table 1. With respect to Comparative Examples 1 to 3, since the substrate was exposed and thus $CO_2$ and $CH_4$ were not membrane-separated, "$CO_2$ permeability" and "$CO_2/CH_4$ separation coefficient" could not be measured.

[Table 1]

| | 1-admantanamine/silica | water/silica | Seed crystal average particle diameter (nm) | Seed crystal weight per unit area (μg/cm²) | Temp. (°C) | Time (hr) | Membrane appearance | $CO_2$ permeability ($\times 10^{-3}$ mol/m²·s) | $CO_2/CH_4$ separation coefficient | Average thickness (μm) |
|---|---|---|---|---|---|---|---|---|---|---|
| Ex.1 | 0.02679 | 24 | 190 | 0.726 | 150 | 72 | No substrate | 1.16 | 7.51 | 11.2 |
| Ex.2 | 0.01786 | 24 | 190 | 0.726 | 135 | 120 | No substrate exposed | 1.62 | 72.07 | 6.2 |
| Ex.3 | 0.02679 | 24 | 190 | 0.726 | 135 | 120 | No substrate exposed | 1.81 | 32.10 | 8.2 |
| Ex.4 | 0.02530 | 34 | 190 | 0.726 | 135 | 120 | No substrate exposed | 2.14 | 3.21 | 8.9 |
| Ex.5 | 0.02679 | 24 | 190 | 0.726 | 140 | 72 | No substrate exposed | 1.90 | 16.87 | 8.1 |
| Ex.6 | 0.01786 | 24 | 190 | 0.726 | 140 | 72 | no substrate | 2.66 | 3.85 | 6.6 |
| Ex.7 | 0.02679 | 24 | 190 | 0.726 | 150 | 60 | No substrate exposed | 1.65 | 10.16 | 9.7 |
| Ex.8 | 0.02679 | 24 | 190 | 0.726 | 165 | 48 | No substrate exposed | 1.78 | 4.95 | 8.1 |
| Ex.9 | 0.02679 | 24 | 190 | 0.242 | 150 | 72 | No substrate exposed | 1.15 | 4.39 | 12.0 |
| Ex.10 | 0.02679 | 24 | 190 | 2.177 | 150 | 48 | No substrate exposed | 1.97 | 11.27 | 4.9 |
| Ex.11 | 0.06250 | 33 | 190 | 0.741 | 145 | 24 | No substrate exposed | 7.73 | 20.34 | 5.3 |
| Ex.12 | 0.03929 | 35 | 190 | 0.247 | 165 | 12 | No substrate exposed | 20.13 | 6.74 | 2.9 |
| Ex.13 | 0.03929 | 35 | 190 | 1.911 | 165 | 7 | No substrate exposed | 21.40 | 38.58 | 1.3 |
| Ex.14 | 0.00558 | 15 | 190 | 2.470 | 145 | 6 | No substrate exposed | 38.66 | 23.95 | 0.6 |

(continued)

| | 1-admantanamine /silica | water/ silica | Seed crystal average particle diameter nm | Seed crystal weight per unit area μg/cm² | Temp. °C | Time hr | Membrane appearance | $CO_2$ permeability $\times 10^{-3}$mol/m²·s | $CO_2/CH_4$ separation coefficient | Average thickness μm |
|---|---|---|---|---|---|---|---|---|---|---|
| Ex.15 | 0.05890 | 35 | 126 | 7.376 | 140 | 22 | No substrate exposed | 5.81 | 14.09 | 1.5 |
| Ex.16 | 0.01563 | 21 | 126 | 21.38 | 140 | 10 | No substrate exposed | 5.35 | 3.10 | 1.3 |
| Ex.17 | 0.01786 | 24 | 126 | 11.04 | 120 | 60 | No substrate exposed | 6.52 | 4.97 | 1.5 |
| Com.1 | 0.00100 | 9 | 190 | 0.726 | 150 | 72 | Substrate exposed | - | - | - |
| Com.2 | 0.01000 | 600 | 190 | 0.726 | 150 | 72 | Substrate exposed | - | - | - |
| Com.3 | 0.02679 | 24 | 340 | 0.726 | 150 | 72 | Substrate exposed | - | - | - |

As can be seen from Table 1, the DDR type zeolite membranes obtained in Examples 1 to 17, in which the surface of the substrate is not exposed, are uniformly formed. On the contrary, the DDR type zeolite membranes obtained in Comparative Examples 1 to 3, in which the surface of the substrate is exposed, are not uniformly formed. The "average thickness" of Comparative Examples 1 to 3 could not be measured, because the thickness is not uniform, and there is large variance. The thickness of the Comparative Examples 1 to 3 was about 10 to 25 $\mu$m, except for a part where the surface of the substrate was exposed.

Industrial Applicability

The invention may be used as a method for forming a membrane in a thin and uniform membrane shape since the DDR type zeolite having the molecular sieves function is used as the gas separation membrane, and thereby it is possible to produce the zeolite membrane having high gas permeability.

**Claims**

1. A method for producing a DDR type zeolite membrane, the method comprising: immersing a porous substrate in a raw material solution containing 1-adamantanamine, silica, and water; and carrying out a hydrothermal synthesis of DDR type zeolite in the presence of a DDR type zeolite seed crystal to form a DDR type zeolite membrane on the surface of the porous substrate,
   wherein the content ratio of 1-adamantanamine to silica (1-adamantanamine/silica) is 0.002 or more and less than 0.03in terms of molar ratio, and the content ratio of water to silica (water/silica) is in the range of 10 to 500 in terms of molar ratio,
   wherein the seed crystal has an average particle diameter of 300 nm or less, and
   wherein the seed crystal has a value of mass per unit surface area of the porous substrate in the range of 0.03 to 50 $\mu$g/cm$^2$, which value is obtained by dividing the mass of the seed crystal by the area of the surface of the porous substrate where the seed crystal is present.

2. The method for producing a DDR type zeolite membrane according to Claim 1, wherein the content ratio of water to silica (water/silica) is 10 or more and less than 20.

3. The method for producing a DDR type zeolite membrane according to Claim 1 or 2, wherein the raw material solution contains ethylenediamine.

4. The method for producing a DDR type zeolite membrane according to any one of Claims 1 to 3, wherein the DDR type zeolite membrane has a thickness of 15 $\mu$m or less.

5. The method for producing a DDR type zeolite membrane according to any one of Claims 1 to 4, wherein the seed crystal is dispersed in the raw material solution to immerse the porous substrate therein.

6. The method for producing a DDR type zeolite membrane according to any one of Claims 1 to 4, wherein the seed crystal is applied to the porous substrate, and the porous substrate having the seed crystal applied thereto is immersed in the raw material solution.

7. The method for producing a DDR type zeolite membrane according to any one of Claims 1 to 6, wherein the porous substrate has a sheet shape, a cylinder shape, a honeycomb shape, or a monolith shape integrally formed of a plurality of cylindrical tubes.

**Patentansprüche**

1. Verfahren zur Herstellung einer Membran aus Zeolith des Typs DDR, wobei das Verfahren Folgendes umfasst: das Eintauchen eines porösen Substrats in eine Rohmateriallösung, die 1-Adamantanamin, Kieselerde und Wasser enthält; und das Durchführen einer hydrothermalen Synthese von Zeolith des Typs DDR in Gegenwart eines Impfkristalls aus Zeolith des Typs DDR, um eine Membran aus Zeolith des Typs DDR an der Oberfläche des porösen Substrats auszubilden,
   worin das Gehaltsverhältnis zwischen 1-Adamantanamin und Kieselerde (1-Adamantanamin/Kieselerde) 0,002 oder mehr und weniger als 0,03, bezogen auf das Molverhältnis, beträgt und das Gehaltsverhältnis zwischen Wasser und Kieselerde (Wasser/Kieselerde) im Bereich von 10 zu 500, bezogen auf das Molverhältnis, liegt,
worin der Impfkristall einen mittleren Teilchendurchmesser von 300 nm oder weniger aufweist und
worin der Impfkristall einen Massenwert pro Oberflächeneinheit des porösen Substrats im Bereich von 0,03 bis 50 $\mu$g/cm$^2$ aufweist, wobei dieser Wert durch das Dividieren der Masse des Impfkristalls durch die Oberfläche des porösen Substrats, auf dem der Impfkristall vorliegt, erhalten wird.

2. Verfahren zur Herstellung einer Membran aus Zeolith des Typs DDR nach Anspruch 1, worin das Gehaltsverhältnis zwischen Wasser und Kieselerde (Wasser/Kieselerde) 10 oder mehr und weniger als 20 beträgt.

3. Verfahren zur Herstellung einer Membran aus Zeolith des Typs DDR nach Anspruch 1 oder 2, worin die Rohmateriallösung Ethylendiamin enthält.

4. Verfahren zur Herstellung einer Membran aus Zeolith des Typs DDR nach einem der Ansprüche 1 bis 3, worin die Membran aus Zeolith des Typs DDR eine Dicke von 15 $\mu$m oder weniger aufweist.

5. Verfahren zur Herstellung einer Membran aus Zeolith des Typs DDR nach einem der Ansprüche 1 bis 4, worin der Impfkristall in der Rohmateriallösung dispergiert wird, um das poröse Substrat darin einzutauchen.

6. Verfahren zur Herstellung einer Membran aus Zeolith des Typs DDR nach einem der Ansprüche 1 bis 4, worin der Impfkristall auf das poröse Substrat aufgebracht wird und das poröse Substrat mit dem darauf aufgebrachten Impfkristall in die Rohmateriallösung eingetaucht wird.

7. Verfahren zur Herstellung einer Membran aus Zeolith des Typs DDR nach einem der Ansprüche 1 bis 6, worin das poröse Substrat eine Plattenform, eine Zylinderform, eine Wabenform oder eine einstückig aus einer Vielzahl von zylindrischen Rohren ausgebildete Monolithform aufweist.

**Revendications**

1. Procédé pour produire une membrane en zéolite de type DDR, lequel procédé comprend : l'immersion d'un substrat poreux dans une solution de matières premières contenant de la 1-adamantanamine, de la silice, et de l'eau ; et la mise en oeuvre d'une synthèse hydrothermale de zéolite de type DDR en présence d'un germe cristallin de zéolite de type DDR pour former une membrane en zéolite de type DDR sur la surface du substrat poreux,
dans lequel le rapport des contenus de la 1-adamantanamine à la silice (1-adamantanamine/silice) est de 0,002 ou plus et inférieur à 0,03 en termes de rapport molaire, et le rapport des contenus de l'eau à la silice (eau/silice) est situé dans la plage allant de 10 à 500 en termes de rapport molaire,
dans lequel le germe cristallin a une granulométrie moyenne de 300 nm ou moins, et
dans lequel le germe cristallin a une valeur de masse par unité de surface du substrat poreux située dans la plage allant de 0,03 à 50 $\mu$g/cm$^2$, cette valeur étant obtenue par division de la masse du germe cristallin par la superficie de la surface du substrat poreux où le germe cristallin est présent.

2. Procédé pour produire une membrane en zéolite de type DDR selon la revendication 1, dans lequel le rapport des contenus de l'eau à la silice (eau/silice) est de 10 ou plus et est inférieur à 20.

3. Procédé pour produire une membrane en zéolite de type DDR selon la revendication 1 ou 2, dans lequel la solution de matières premières contient de l'éthylènediamine.

4. Procédé pour produire une membrane en zéolite de type DDR selon l'une quelconque des revendications 1 à 3, dans lequel la membrane en zéolite de type DDR a une épaisseur de 15 $\mu$m ou moins.

5. Procédé pour produire une membrane en zéolite de type DDR selon l'une quelconque des revendications 1 à 4, dans lequel le germe cristallin est dispersé dans la solution de matières premières pour que le substrat poreux y soit immergé.

6. Procédé pour produire une membrane en zéolite de type DDR selon l'une quelconque des revendications 1 à 4, dans lequel le germe cristallin est appliqué au substrat poreux, et le substrat poreux auquel est appliqué le germe cristallin est immergé dans la solution de matières premières.

**7.** Procédé pour produire une membrane en zéolite de type DDR selon l'une quelconque des revendications 1 à 6, dans lequel le substrat poreux a une forme de feuille, une forme de cylindre, une forme de nid d'abeille, ou une forme monolithique formée intégralement d'une pluralité de tubes cylindriques.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003159518 A
- EP 1437172 A
- JP 2005053747 A
- JP 2004083375 A

**Non-patent literature cited in the description**

- **W. M. MEIER ; D. H. OLSON ; CH. BAERLOCHER.** Atlas of zeolite structure types. Elsevier, 1996
- **M. J. DEN EXTER ; J. C. JANSEN ; H. VAN BEK-KUM et al.** Studies in Surface Science and Catalysis. Elsevier, 1994, vol. 84, 1159-1166